# EUROPEAN PATENT APPLICATION

(11) **EP 4 393 880 A1**
(43) Date of publication of application: **03.07.2024**
(21) Application number: 22217319.7
(22) Date of filing: 30.12.2022
(51) Int. Cl.: C01C 1/04, C01B 3/02

(54) **ANALOGOUS PRESSURE AMMONIA SYNTHESIS PROCESS**

(71) Applicant: Sabic Agri-Nutrients Company, 31961 Jubail Industrial City (SA)
(72) Inventor: Ul HAQUE, Israr, 11402 Riyadh (SA)
(74) Representative: Modiano, Gabriella Diana

(57) **Abstract**

Disclosed herein is a method of producing ammonia in an analogous pressure level ammonia synthesis loop. The method may comprise synthesizing a hydrocarbon gas or liquid feed to provide syngas; operating, in once through fashion, a first ammonia synthesis section at a first pressure level to process and synthesize the syngas and or a makeup gas into ammonia; recovering at least a first portion of ammonia from the first ammonia synthesis section; combining unconverted syngas from the first ammonia synthesis section with a recycle stream of a second ammonia synthesis section, wherein the second synthesis section operates at a second pressure level in a recirculating fashion, and the first pressure level and the second pressure level are the same, or analogous; and recovering at least a second portion of ammonia from the second synthesis section.

## Description

### FIELD OF DISCLOSURE

The present disclosure relates to the production of ammonia. More specifically, the disclosure relates to processes and systems for the production of ammonia combining once through and loop synthesis processes.

### BACKGROUND

Ammonia is a key component in fertilizer manufacturing and is one of the largest-volume synthetic chemicals produced worldwide. Its production typically requires considerable amounts of energy and large equipment capable of operating at high pressures. At an industrial scale, ammonia is generally produced via catalytic conversion of a synthesis gas. Whether for fertilizer, fuel purposes, or otherwise, larger scale ammonia plants are increasingly prevalent, particularly in blue ammonia production which derives a hydrogen reagent from hydrocarbon feedstocks, or from renewable sources, and is so-called "blue" because it is a low-carbon emission method of producing ammonia. (Said blue ammonia may be produced via steam reformation or other processes, and subsequently capturing of carbon dioxide, or carbon species, utilizing or sequestrating it in an environmentally acceptable manner.) A large-scale ammonia production in a synthesis loop however presents a number of issues including converter and equipment size challenges. Conventional approaches that incorporate a once through configuration rather than a synthesis loop also suffer from disadvantages including depleted ammonia production and a requirement for larger converters. Moreover, conventional once through processers operate at a significantly lower pressure than generally required for synthesis loop and may contribute to lower ammonia production about 35% or less. Both conventional synthesis loop systems and once through configurations also require large equipment sizes and feature a significant ammonia energy consumption.

There remains a need in the art for ammonia synthesis processes that maintains sufficient ammonia production without the need for larger scale equipment and greater energy usage, particularly for a larger ammonia production plant. These and other needs are addressed by the present disclosure.

### SUMMARY OF THE DISCLOSURE

As described in more detail herein, the present disclosure provides processes, apparatuses, and systems for the production of ammonia. Integrated processes of synthesis gas (syngas) conversion to ammonia are described. Aspects of the present disclosure allow for a syngas and makeup gas to be converted to an ammonia product through a first once through ammonia synthesis circuit coupled to a second ammonia synthesis loop that is operated at an equal or analogous pressure level.

In an aspect, a method of producing ammonia may comprise first synthesizing a hydrocarbon gas or liquid feed to provide syngas. A first ammonia synthesis section may be operated in a once through fashion to process the syngas into ammonia. The syngas entering the first ammonia synthesis section may also be called fresh makeup gas, or makeup gas. At least a first portion of an ammonia product may be recovered from the first ammonia synthesis section. A second synthesis section may be operated at a second pressure level in a recirculating fashion to convert unconverted syngas from the first synthesis section into a second ammonia product. Unconverted syngas from the first synthesis section may be combined with a recycle stream of the second synthesis section for conversion to ammonia. The first and second ammonia synthesis sections may operate at the same or similar pressure levels. At least a second portion of ammonia may be recovered from the second ammonia synthesis section.

In further aspects, a system for producing ammonia may comprise a syngas compressor configured to deliver compressed makeup syngas to a first ammonia synthesis section, wherein the first ammonia synthesis section operates in a once through (OT) fashion; and a second ammonia synthesis section configured to receive unconverted syngas from the first ammonia synthesis section, wherein the second ammonia synthesis section operates in a recirculating fashion. The first ammonia synthesis section and the second ammonia synthesis section are configured to operate at equal or analogous pressure levels.

The present disclosure relates to further systems and processes that facilitate the syngas conversion to ammonia described herein.

### BRIEF DESCRIPTION OF THE FIGURES

The accompanying figures, which are incorporated in and constitute a part of this specification, illustrate several aspects and together with the description serve to explain the principles of the disclosure.
**FIG. 1** shows a flowsheet for syngas conversion to ammonia in accordance with aspects of the present disclosure.
**FIG. 2** shows a schematic diagram of an ammonia synthesis system in accordance with an aspect of the present disclosure.

Additional advantages of the disclosure will be set forth in part in the description which follows, and in part will be obvious from the description, or can be learned by practice of the disclosure. The advantages of the disclosure will be realized and attained by means of the elements and combinations particularly pointed out in the appended claims.

### DETAILED DESCRIPTION

The synthesis of ammonia is energy-intensive and proceeds under high pressure conditions. Generally, ammonia is produced through a catalyzed reaction between hydrogen and nitrogen at high temperatures and under high pressure, typically about 100 bar and about 350 °C, depending upon catalyst type and activity. Although an ammonia plant front-end may be designed as a single train, the large-scale ammonia production in a synthesis loop faces challenges because larger converters and loop equipment sizes are required. Alternatively, ammonia synthesis via an OT configuration has been used, but necessarily proceeds at a lower pressure, about 50% of the conventional loop synthesis pressure. Such an OT configuration suffers from reduced ammonia production, larger converter sizes, and much higher energy consumption.

More recently, systems have combined an OT synthesis circuit with a synthesis loop for the production of ammonia. The following patents and publications are representative of conventional processes for ammonia synthesis, including integrated OT synthesis circuit and synthesis loop systems. United States Patent US 11,167,997 discloses a method of producing synthesis gas in a dual pressure level ammonia plant. The process combines a first synthesis section, operated in a once through fashion at a high-pressure level, with a second synthesis section operated in a recirculating fashion at a pressure level higher than that of the first synthesis section. The process further comprises cooling the synthesis gas downstream from an OT reactor in the first synthesis section. United States Published Patent Application 2004/0042951 discloses processes and devices for ammonia synthesis from a compressed gas mixture, with a higher inert gas content. The processes feature ammonia synthesis in a loop system at multiple pressures where an OT section operates at a lower pressure and the loop synthesis operates at a higher pressure. United States Published Patent Application US 2020/0039831 further describes the processes of US 2004/0042951 and features makeup gas treated to a lower inert gas content. Indian Patent Application IN 200300750 discloses a system for ammonia synthesis comprising multiple synthesis systems combined with a downstream synthesis system operated at a higher pressure than the preceding multiple synthesis systems. United States Published Patent Application 2019/0359494 discloses a dual pressure process for synthesizing ammonia comprising reactive steps at different pressures in a once through synthesis circuit. Indian Patent IN 370517B discloses a dual pressure process for ammonia synthesis featuring recycling depleted syngas in a once through circuit to a once through circuit compressor.

The processes and systems of the present disclosure mitigate the difficulties of large ammonia production in a single train setup. Aspects of the present disclosure exploit the high amount of fresh makeup gas (MUG) available for large ammonia production by converting at least a portion of this MUG to ammonia in a separate high pressure (HP) OT synthesis circuit, or section, prior to processing the remaining unconverted MUG through a conventional ammonia synthesis loop. In the disclosed integrated processes, the OT circuit operates at the same or similar pressure as the conventional synthesis loop. Such an analogous pressure system differs from the significantly different pressures employed in conventional integrated systems described above. This operation maximizes ammonia production and separation in the OT synthesis section , which significantly offloads the conventional ammonia synthesis loop.

The disclosed HP OT circuit coupled to a synthesis loop operated at an equal or analogous operating pressure facilitates an increased per pass ammonia conversion, facilitating higher ammonia production in a single plant train. The disclosed coupled configuration at similar pressure allows for the synthesis loop to utilize relatively smaller equipment sizes while still producing large amounts of ammonia in a single plant. More specifically, the disclosed processes may produce about 50% more ammonia than is produced in conventionally configured and operated ammonia plants.

According to various aspects, the present disclosure relates to a method of producing ammonia in an analogous pressure level system. The method may comprise synthesizing a hydrocarbon gas or liquid feed to provide syngas. The syngas may be processed as a makeup gas in a first ammonia synthesis section operated in a once through fashion at a first pressure. At least a first portion of ammonia may be recovered from the first ammonia synthesis section. Unconverted syngas from the first ammonia synthesis section may be combined with a recycle stream of a second ammonia synthesis section. The second ammonia synthesis section may operate at a second pressure level in a recirculating fashion. The first pressure level and the and the second pressure level are equal or analogous to one another. At least a second portion of ammonia may be recovered from the second ammonia synthesis section.

In various aspects, the first ammonia synthesis section provides a product stream comprising ammonia and a gaseous effluent comprising unreacted makeup gas. The first ammonia synthesis circuit may typically comprise one or more ammonia OT ammonia converters, cooling and chilling assemblies, and an ammonia separator. The ammonia separator may separate the condensed ammonia from the gaseous effluent. At least a portion of this gaseous effluent is combined with a second gaseous effluent comprising unreacted syngas from a second ammonia synthesis section. The second ammonia synthesis section may comprise one or more ammonia converters, cooling and chilling assemblies, an ammonia separator, and a loop circulator. The second ammonia synthesis section operates as a conventional ammonia synthesis loop in a recirculating fashion. That is, the second ammonia synthesis section may proceed in a circulating or recycled fashion such that a second gaseous effluent comprising unreacted syngas from the second ammonia synthesis section combines with the first gaseous effluent of the first ammonia synthesis section in a loop circulator. The unreacted gaseous effluent from the first section may be added before or after the loop circulator, depending upon the pressures employed in both sections.

In various aspects, the first and second synthesis sections are operated at equal or analogous pressure levels. Reagent gases entering the ammonia converters of the first and second ammonia synthesis sections may be pressurized to equal or analogous pressure levels. As an example, the first synthesis section may operate at the same pressure as the second synthesis section. Alternatively, the first ammonia synthesis section and the ammonia synthesis section may operate at analogous pressures or at pressure level values about 10 % of one another. For example, a first pressure level for the first synthesis section is within 20 bar of a second pressure level for the second synthesis section. In some aspects, a pressure level for the first ammonia synthesis section is greater than the second pressure level for the second synthesis section by about 20 bar, as an option. In further aspects, the pressure level for the first synthesis section is lower than the pressure level for the second ammonia synthesis section by about 20 bar, as an option. Operating pressures for the first ammonia synthesis section and the second ammonia synthesis section are from about 100 bar to about 250 bar, or from about 200 bar to about 250 bar.

As provided herein, the second synthesis section operates in a recirculating fashion. A recirculating fashion may refer to a recycle stream of the second synthesis section redirected to the second synthesis section via a loop circulator. The recycle stream may be combined with unconverted syngas from the first synthesis section to provide a loop circulator feed. In some aspects, the circulator may be a compressor that pressurizes the loop circulator feed, comprising the recycle stream and unconverted syngas from the first synthesis section, to a suitable pressure for ammonia synthesis in the second synthesis section. In an aspect, the loop circulator may be driven separately using a dedicated driver.
In further aspects, the loop circulator may be configured as a component on a shaft of the syngas compressor.

The syngas may be comprised primarily of hydrogen and nitrogen and may be obtained from any plant front-end configuration and flowsheet, with lower and higher amount of inert gases, primarily methane, argon, helium and others. In various aspects, the syngas may be produced in a front-end section of a given plant by reforming of a suitable hydrocarbon feedstock such as natural gas. As understood in the art, the front-end section may include, for example, a reforming and shift conversion sections and a purification section. The reforming section may comprise one or more reformers, such as a primary reformer and a secondary reformer, followed by one or more shift converters. The purification section may comprise a carbon dioxide removal section and a methanation section to provide the syngas for processing as a makeup gas for conversion to ammonia in the disclosed system.

The obtained syngas is at a pressure much lower than the pressure necessary to proceed with catalytic conversion to ammonia. For example, the makeup gas and syngas may be at a pressure of about 45 bar. The makeup syngas may be pressurized in a suitable gas compression section, such as a syngas compressor. In some aspects, compressed makeup syngas may be pressurized to a pressure of about 200 bar, for example, about 215 bar. The syngas compressor may comprise a multi-stage compressor. The compressed makeup gas may be supplied from the syngas compressor to the first synthesis section where it is converted to ammonia in the presence of a catalyst. The first ammonia synthesis section comprises a once through circuit operating at a pressure of about 200 bar or greater, or lower.

According to various aspects, the syngas may be processed with a makeup gas for ammonia synthesis in the presence of a catalyst. As known in the art, suitable catalysts may comprise metal, metal oxides, or a combination thereof.

In some aspects, the makeup gas comprises hydrogen, nitrogen, methane (CH₄) and argon (Ar). The makeup gas is primarily H₂ and N₂ gases and a small content of non-reacting components, methane and argon. These components impede the conversion rate and are referred to herein as "inert gases". The inert gases may accumulate in circulating gases in the ammonia synthesis loop of the second ammonia synthesis section. The concentration of the inert gases may be controlled by withdrawal of a purge gas stream from the synthesis loop. As an option, a small purge stream may also be considered from the unconverted syngas from the first section, if needed. In some aspects, the syngas or makeup gas is free of or substantially free of any oxides or inert gases and may also optionally be treated via a process of nitrogen wash, cold box, or a combination thereof. In some aspects, the makeup gas is free of or substantially free of any oxides. The makeup gas may be treated to remove, or minimize, inert gases. For example, the makeup gas may be treated via a process of nitrogen wash, cold box, or a combination thereof to remove the undesired components such as inert gases or oxides. In yet further examples, the syngas or makeup gas may not be treated to remove inert gases and instead proceeds through the disclosed reaction processes with a higher inert content. The hydrogen and nitrogen of the makeup gas may be present in a particular molar ratio. In some aspects, the makeup gas has a hydrogen to nitrogen ratio of from about 3.5:1 to about 2.5:1, or from about 4:1 to about 2:1, from about 3.5:1 to about 2.5:1, from about 3.2:1 to about 2.8:1, or from about 3.1:1 to about 2.9:1. As an example, the makeup gas has a hydrogen to nitrogen ratio of about 3:1. However, this value may be adjusted to meet catalyst and process needs.

Ammonia conversion processes in ammonia converters of the first ammonia synthesis section and the second ammonia synthesis section proceed in the presence of a catalyst. Suitable catalysts may comprise metal, metal oxides, or a combination thereof.

Ammonia converters of the first ammonia synthesis section and the second ammonia synthesis section may comprise axial, radial, axial-radial, quench reactors, both vertical, horizontal or a combination thereof.

In various aspects, one or more separation processes may be employed in the ammonia separators of the first and second ammonia synthesis sections to separate gaseous and liquid components generated during ammonia synthesis. The isolation of gaseous components of a product mixture may also be performed according to a number of gas separation techniques commonly practiced by those skilled in the art. A product effluent comprising ammonia may be subjected to one or more separation processes to provide an ammonia product stream. The one or more separation processes may comprise water cooling, chilling of syngas using ammonia or other medium, or a combination thereof.

In the second ammonia synthesis section, the concentration of the inert gases may be controlled by withdrawal of a purge gas stream from the synthesis loop. Residues of ammonia may be scrubbed from the purge gas. Hydrogen and, optionally, nitrogen may be separated and recovered, for example via membranes or by fractionation at low temperatures. The remaining inert gases are discarded or utilized in other ways, such as for fuel. The recovered hydrogen and optionally also the recovered nitrogen may be mixed with the makeup gas before, or between compression stages.

Ammonia synthesis, or formation, improves with increased pressure. When compared to conventional configurations, elevating the pressure in the OT section to an equal or analogous pressure with the synthesis loop section, may help to improve per pass conversion (PPC) in the ammonia converter. Without wishing to be bound by any particular theory, this PPC improvement may be attributed to catalytic activity, catalytic bed design and catalyst volume, and reduced compressor strain. Regarding catalytic activity, the present disclosure may feature a suitable catalyst for ammonia synthesis activated at a lower temperature and higher pressure (about 215 bar) as compared to operating the catalyst at a lower pressure (conventionally, 100 bar). As an illustrative example, syngas may enter the catalyst bed at 345 °C and the catalyst is active at the higher pressure to initiate conversion to ammonia. Conversely, when the pressure is maintained at a lower value for the same catalyst, the catalyst would only become active with an increased temperature of 360 °C. Where the catalyst bed temperature is restricted, for example by equilibrium or metallurgical limitations, the rise in temperature (ΔT) for the high-pressure system is anticipated at 175 °C across a catalyst bed, while the same ΔT for the low-pressure system would be 160 °C. Because ammonia synthesis is exothermic, a higher ΔT indicates a higher PPC in the catalyst bed would be achieved in the disclosed configuration.

With respect to catalytic bed design, a HP system provides a greater equilibrium ammonia conversion when compared to a lower pressure system. Most catalyst beds are configured to approximate equilibrium. Based on this design, the possibility of a higher conversion rate (i.e., the mole percent ammonia concentration at the outlet of the ammonia synthesis converter) is greater when compared to the conversion rate in a system using the same catalyst at lower pressure. In conventional configurations, where OT Synthesis Circuit is operated at a lower pressure, only limited amount of ammonia is produced in this section. In the disclosed processes, since all makeup gas is compressed until a final stage of the compressor, prior to loop circulator, a larger portion of the makeup gas is converted to the ammonia product in the OT synthesis circuit. The disclosed configuration thus maximizes production in the OT synthesis circuit while lowering the load at the ammonia synthesis loop.

### Systems

Various systems may make use of the integrated processes described herein. A method of converting compressed makeup gas and syngas to a liquid ammonia product may comprise combining the components in the presence of a suitable catalyst in a series of discrete synthesis sections. The method may also comprise separating a portion of products from ammonia converter(s) in the synthesis sections for recycle streams. Gaseous streams generated throughout the processes may be directed to different stages throughout the processes to facilitate efficient synthesis of ammonia.

Aspects of the present disclosure relate to a system for producing ammonia. The system may comprise a syngas compressor system configured to deliver compressed syngas to a first synthesis section, wherein the first synthesis section operates in a once through fashion to convert the syngas to ammonia; and a second synthesis section configured to receive unconverted syngas from the first synthesis section, wherein the second synthesis section operates in a recirculating fashion. The first ammonia synthesis section and the second synthesis section are configured to operate at analogous pressures.

To reduce the disadvantages associated with lower pressure, a process has been proposed wherein ammonia is synthesized in a first OT synthesis circuit and a second synthesis loop in series, both operating at analogous, higher, pressures. As provided herein, the first ammonia synthesis circuit may comprise one or more ammonia OT ammonia converters, a cooling assembly, and an ammonia separator. The second ammonia synthesis section may comprise one or more loop ammonia converters, a cooling assembly, an ammonia separator, and a loop circulator. The loop circulator may be configured as part of the first ammonia synthesis section or the second ammonia synthesis. Notably however the loop circulator is configured to receive at least a portion of a gaseous stream comprising unreacted makeup gas from the first ammonia synthesis section. The loop circulator may be configured to (a) receive unconverted syngas from the second ammonia separator as a recycle stream and (b) combine the recycle stream of the second synthesis section with unconverted syngas from the first synthesis section. In certain aspects, the loop circulator, though may be configured as the last stage of the syngas compressor. In specific aspects however, the loop circulator is configured as a separate compressor, or as a circulator. The separate loop circulator may improve flexibility of the system and maintain the equal or analogous pressures for the first ammonia synthesis section (OT circuit) and second ammonia synthesis section (synthesis loop).

At outlets of the ammonia converters, the ammonia generated is in gaseous form. To separate the ammonia product, it is condensed so that ammonia product can be withdrawn as a liquid from the syngas. As the dew point of ammonia depends on its partial pressure, the condensation of ammonia is favored by a high synthesis pressure, a high ammonia concentration and a low temperature. A yield for the liquid ammonia product from the first synthesis section may be about 40%. A yield for the liquid ammonia product from the second synthesis section may be about 60%.

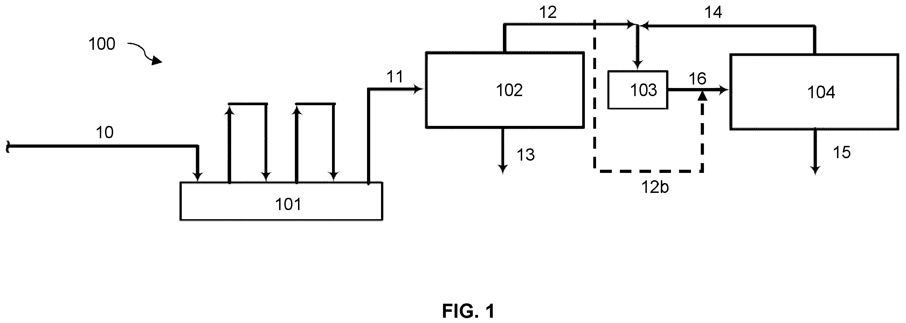

The present disclosure may be described in further detail with reference to the schematic flow diagram in FIG. 1 depicting an ammonia synthesis flowsheet **100** according to the present disclosure. Shown therein are certain integrated processes for producing ammonia in a single unit in accordance with the present disclosure. In some aspects, impurities and contaminants may be first removed from an inlet feed stream such fresh makeup gas **10,** which may primarily comprise hydrogen and nitrogen gases as well as methane and argon as inert gases. Syngas may be obtained in a front-end section (not shown), for example by reforming of a hydrocarbon feedstock. The fresh makeup gas **10** proceeds through syngas compressor **101** to provide a compressed makeup syngas stream **11.** Compressed makeup syngas stream **11** proceeds to the first ammonia synthesis section **102** which provides a liquid ammonia product **13** and a gaseous stream **12** comprising unreacted makeup syngas. At least a portion of gaseous stream **12** proceeds to a loop circulator **103** which receives a gaseous stream **14** comprising unreacted syngas from the second ammonia synthesis section. Gaseous stream **12** and gaseous stream **14** may be combined in the circulator as a recycle stream **16** that proceeds to the second ammonia synthesis section **104.** Alternatively, gaseous stream **12** may be combined with gaseous stream **16** as stream **12b** without compression in the loop circulator **103** that proceeds to the second ammonia synthesis section **104.** Recycle stream **16** is recirculated to provide a second liquid ammonia product **15** and gaseous stream **14.**

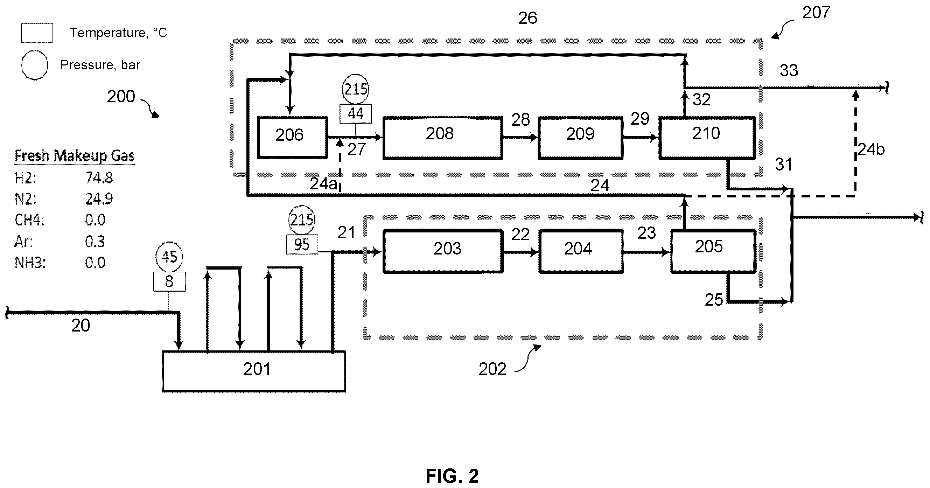

As provided herein, the first and second synthesis sections may comprise respective ammonia converters, cooling and chilling assemblies, and ammonia separators configured for efficient ammonia synthesis and separation. Referring to FIG. 2 presenting an aspect of the analogous pressure OT and loop ammonia synthesis diagram **200,** fresh makeup gas **20** proceeds through syngas compressor **201.** The fresh makeup gas **20,** introduced at a lower temperature and pressure, such as 45 bar and 8 °C, is compressed to a higher pressure and temperature, such as 215 bar and 95 °C, in the syngas compressor **201** to provide compressed makeup syngas stream **21** for conversion to ammonia. Compressed makeup syngas stream **21** is directed to the first ammonia synthesis section **202** to one or more OT ammonia converters **203,** which provide gaseous mixture stream **22** comprising 15 mole percent to 24 mol.% ammonia. Gaseous mixture stream **22** is cooled in a chilling assembly **204,** which may comprise a cooler-condenser, to provide mixture stream **23** comprising at least partially condensed ammonia. Mixture stream **23** enters OT ammonia separator **205** where a gaseous stream **24** is separated from a liquid ammonia product **25.** Liquid ammonia product **25** corresponds to an ammonia yield of about 40%.

Gaseous stream **24,** which also comprises ammonia not condensed in the chilling assembly **204,** proceeds to the loop circulator **206** to be combined with a recycle stream **26** from the second ammonia synthesis section **207.** Gaseous streams **24** and **26** are combined and pressurized in the loop circulator **206** to provide compressed gas stream **27** at a higher pressure, about 215 bar, for conversion to ammonia in the loop ammonia converter **208.** Alternatively, gaseous stream **24** may be combined with gaseous stream **27** as stream **24a** without compression in the loop circulator **206** that proceeds to the second ammonia synthesis section **207.** In loop ammonia converter **208,** gaseous stream **27** is converted to gaseous mixture stream **28** comprising 15-24 mol.% ammonia. Gaseous mixture stream **28** is cooled inside the chilling assembly **209** where ammonia partially condenses to provide mixture stream **29.** Mixture stream **29** enters a loop ammonia separator **210** where a second liquid ammonia product **31** is separated from unreacted gaseous stream **32,** which also contains ammonia not condensed in the chilling assembly **209.** Second liquid ammonia product **31** corresponds to an ammonia yield of about 60%.

Purge stream **33** is separated from unreacted gaseous stream **32,** via for example, a purge gas unit (not shown), to provide recycle stream **26,** which is recirculated with gas stream **24** from loop circulator **206** to the loop ammonia converter **208.** A full or part of purge can also be taken from gas stream **24** as stream **24b.** Recovered gas from the purge stream may be recycled upstream or downstream of stream 20. Ammonia product streams **25** and **31** from the synthesis sections may be combined.

Reactant streams (i.e., makeup syngas) may be contacted with the catalyst(s) via any of the known reactor systems within the discretion of one skilled in the art, including for example trickle bed reactors, so long as the reactant stream and catalyst are contacted under conditions suitable for ammonia synthesis and at the disclosed pressures. In a specific aspect, the one or more OT ammonia converters or loop ammonia converters may comprise axial, radial, axial-radial quench reactors. These reactors may be vertical, horizontal, or some combination of vertical and horizontal reactors.

While aspects of the present disclosure can be described and claimed in a particular statutory class, such as the system statutory class, this is for convenience only and one of skill in the art will understand that each aspect of the present disclosure can be described and claimed in any statutory class. Unless otherwise expressly stated, it is in no way intended that any method or aspect set forth herein be construed as requiring that its steps be performed in a specific order. Accordingly, where a method claim does not specifically state in the claims or descriptions that the steps are to be limited to a specific order, it is no way intended that an order be inferred, in any respect. This holds for any possible non-express basis for interpretation, including matters of logic with respect to arrangement of steps or operational flow, plain meaning derived from grammatical organization or punctuation, or the number or type of aspects described in the specification.

### ASPECTS

The disclosed systems and methods include at least the following aspects.

Aspect 1. A method of producing ammonia in an analogous pressure level ammonia synthesis loop, the method comprising: synthesizing a hydrocarbon gas or liquid feed to provide syngas; operating, in once through fashion, a first ammonia synthesis section at a first pressure level to process and synthesize the syngas and or a makeup gas into ammonia; recovering at least a first portion of ammonia from the first ammonia synthesis section; combining unconverted syngas from the first ammonia synthesis section with a recycle stream of a second ammonia synthesis section, wherein the second synthesis section operates at a second pressure level in a recirculating fashion, and the first pressure level and the second pressure level are the same, or analogous; and recovering at least a second portion of ammonia from the second synthesis section.

Aspect 2. The method of aspect 1, further comprising directing the recycle stream of the second synthesis section, to a loop circulator.

Aspect 3. The method of any one of aspects 1-2, wherein a loop circulator feed of the loop circulator comprises the recycle stream of the second synthesis section and unconverted syngas from the first synthesis section.

Aspect 4. The method of aspect 2, wherein the loop circulator is driven, separately, using a dedicated driver, or is configured to be on a shaft of the syngas compressor.

Aspect 5. The method of any one of aspects 1-4, wherein the first pressure level for the first synthesis section is greater than the second pressure level in the second synthesis section up to 20 bar

Aspect 6. The method of any one of aspects 1-4 wherein the first pressure level for the first synthesis section is lower than the second pressure level in the second synthesis section up to 20 bar.

Aspect 7. The method of aspects 1-6, wherein the first pressure level for the first synthesis section is within 20 bar of the second pressure level for the second synthesis section.

Aspect 8. The method of any one of aspects 1-7, wherein operating pressures for the first synthesis section and the second synthesis section are from about 100 bar to about 300 bar.

Aspect 9. The method of any one of aspects 1-8, wherein ammonia from the first synthesis section is separated via water cooling, chilling of syngas using ammonia or other medium, or a combination thereof.

Aspect 10. The method of any one of aspects 1-9, wherein ammonia conversion processes in the first synthesis section and the second synthesis section proceed in the presence of a catalyst.

Aspect 11. The method of aspect 10, wherein the catalyst comprises metal, metal oxide or a combination thereof.

Aspect 12. The method of any one of aspects 1-11, wherein the syngas or makeup gas is free of or substantially free of any oxides.

Aspect 13. The method of any one of aspects 1-12, wherein the syngas or makeup gas is treated via a process of nitrogen wash, cold box, or a combination thereof to remove inert gases.

Aspect 14. The method of any one of aspects 1-13, wherein the makeup gas is free of any oxides.

Aspect 15. The method of any one of aspects 1-13, wherein the makeup gas feed comprises one or more of hydrogen, nitrogen, methane and argon.

Aspect 16. The method of any one of aspects 1-15, wherein the makeup gas feed has a hydrogen to nitrogen ratio from 3.5-1 to about 2.5-1.

Aspect 17. A system for producing ammonia, the system comprising: a syngas compressor configured to deliver compressed syngas to a first synthesis section, wherein the first synthesis section operates in a once through fashion; and a second synthesis section configured to receive unconverted syngas from the first synthesis section, wherein the second synthesis section operates in a recirculating fashion, wherein the first synthesis section and the second synthesis section are configured to operate at analogous pressures.

Aspect 18. The system of aspect 17, wherein the first and second synthesis sections are configured to operate at pressures within 40 bar, within 30 bar, within 20 bar, within 15 bar, or within 10 bar of one another.

Aspect 19. The system of any one of aspects 17-18, wherein the first synthesis section comprises one or more at least a portion of ammonia from unconverted syngas in the first synthesis section.

Aspect 20. The system of any one of aspects 17-19, wherein the second synthesis section comprises at least one ammonia converter, cooling and chilling assemblies, an ammonia separator, and a loop circulator configured to (a) receive unconverted syngas from the second ammonia separator as a recycle stream and (b) combine the recycle stream of the second ammonia synthesis section with unconverted syngas from the first ammonia synthesis section.

Aspect 21. The system for producing ammonia of any one of aspects 17-20, wherein the first ammonia synthesis section and the second ammonia synthesis section comprise axial, radial, axial-radial, quench reactors, both vertical, horizontal or a combination thereof.

It is to be understood that the terminology used herein is for the purpose of describing particular aspects only and is not intended to be limiting. Although any methods and materials similar or equivalent to those described herein can be used in the practice or testing of the present disclosure, example methods and materials are now described.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; and the number or type of embodiments described in the specification.

Throughout this application, various publications are referenced. The disclosures of these publications in their entireties are hereby incorporated by reference into this application in order to more fully describe the state of the art to which this pertains. The references disclosed are also individually and specifically incorporated by reference herein for the material contained in them that is discussed in the sentence in which the reference is relied upon. Nothing herein is to be construed as an admission that the present disclosure is not entitled to antedate such publication by virtue of prior disclosure. Further, the dates of publication provided herein may be different from the actual publication dates, which can require independent confirmation.

Unless defined otherwise, all technical and scientific terms used herein have the same meaning as commonly understood by one of ordinary skill in the art to which this disclosure belongs. Although any methods and materials similar or equivalent to those described herein can be used in the practice or testing of the present disclosure, example methods and materials are now described.

As used in the specification and the appended claims, the singular forms "a," "an" and "the" include plural referents unless the context clearly dictates otherwise. Thus, for example, reference to "an injector" may include one or more injectors.

Ranges can be expressed herein as from "about" one particular value, and/or to "about" another particular value. When such a range is expressed, another aspect includes from the one particular value and/or to the other particular value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "optional" or "optionally" means that the subsequently described event or circumstance can or cannot occur, and that the description includes instances where said event or circumstance occurs and instances where it does not. For example, where the syngas and/or makeup gas may optionally be treated to remove undesired content such as oxides or inert gases includes both treated and untreated syngas and/or makeup gas.

In one aspect, "substantially free of" can be less than about 0.5 mole percent (mole.%). In another aspect, substantially free of can be less than about 0.1 mole%. In another aspect, substantially free of can be less than about 0.01 mole%. In yet another aspect, substantially free of can be less than about 100 ppm. In yet another aspect, substantially free can refer to an amount, if present at all, below a detectable level. For example, the makeup gas feed may be free of or substantially free of any oxides.

Disclosed are the components to be used to prepare the products of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions, and it is understood that there are a variety of structures that can perform the same function that are related to the disclosed structures, and that these structures will typically achieve the same result.

It will be apparent to those skilled in the art that various modifications and variations can be made in the present disclosure without departing from the scope or spirit of the disclosure. Other embodiments of the disclosure will be apparent to those skilled in the art from consideration of the specification and practice of the disclosure disclosed herein. It is intended that the specification and examples be considered as exemplary only, with a true scope and spirit of the disclosure being indicated by the following claims.

All cited patents, patent applications, and other references are incorporated herein by reference in their entirety. However, if a term in the present application contradicts or conflicts with a term in the incorporated reference, the term from the present application takes precedence over the conflicting term from the incorporated reference. While typical embodiments have been set forth for the purpose of illustration, the foregoing descriptions should not be deemed to be a limitation on the scope herein. Accordingly, various modifications, adaptations, and alternatives can occur to one skilled in the art without departing from the spirit and scope herein.

## Claims

1. A method of producing ammonia in an analogous pressure level ammonia synthesis loop, the method comprising:
a. synthesizing a hydrocarbon gas or liquid feed to provide syngas;
b. operating, in once through fashion, a first ammonia synthesis section at a first pressure level to process and synthesize the syngas and or a makeup gas into ammonia;
c. recovering at least a first portion of ammonia from the first ammonia synthesis section;
d. combining unconverted syngas from the first ammonia synthesis section with a recycle stream of a second ammonia synthesis section, wherein the second synthesis section operates at a second pressure level in a recirculating fashion, and the first pressure level and the second pressure level are the same, or analogous; and
e. recovering at least a second portion of ammonia from the second synthesis section.

2. The method of claim 1, further comprising directing the recycle stream of the second synthesis section, to a loop circulator.

3. The method of any one of claims 1-2, wherein a loop circulator feed of the loop circulator comprises the recycle stream of the second synthesis section and unconverted syngas from the first synthesis section.

4. The method of claim 2, wherein the loop circulator is driven, separately, using a dedicated driver, or is configured to be on a shaft of the syngas compressor.

5. The method of any one of claims 1-4, wherein the first pressure level for the first synthesis section is greater than the second pressure level in the second synthesis section up to 20 bar

6. The method of any one of claims 1-4 wherein the first pressure level for the first synthesis section is lower than the second pressure level in the second synthesis section up to 20 bar.

7. The method of claims 1-6, wherein the first pressure level for the first synthesis section is within 20 bar of the second pressure level for the second synthesis section.

8. The method of any one of claims 1-7, wherein operating pressures for the first synthesis section and the second synthesis section are from about 100 bar to about 300 bar.

9. The method of any one of claims 1-8, wherein ammonia conversion processes in the first synthesis section and the second synthesis section proceed in the presence of a catalyst.

10. The method of any one of claims 1-9, wherein the syngas or makeup gas is free of or substantially free of any oxides.

11. The method of any one of claims 1-10, wherein the syngas or makeup gas is treated via a process of nitrogen wash, cold box, or a combination thereof to remove ammonia or inert gas.

12. The method of any one of claims 1-11, wherein the makeup gas feed comprises one or more of hydrogen, nitrogen, methane and argon.

13. The method of any one of claims 1-12, wherein the makeup gas feed has a hydrogen to nitrogen ratio from 3.5:1 to about 2.5:1.

14. A system for producing ammonia, the system comprising:
a. a syngas compressor configured to deliver compressed syngas to a first synthesis section, wherein the first synthesis section operates in a once through fashion; and
b. a second synthesis section configured to receive unconverted syngas from the first synthesis section, wherein the second synthesis section operates in a recirculating fashion,
wherein the first synthesis section and the second synthesis section are configured to operate at analogous pressures.

15. The system of claim 14, wherein the first and second synthesis sections are configured to operate at pressures within 20 bar of one another.
